# EUROPÄISCHE PATENTSCHRIFT

(11) **EP 1 923 508 B1**
(45) Veröffentlichungstag und Bekanntmachung des Hinweises auf die Patenterteilung: **24.06.2009**
(21) Anmeldenummer: 07450194.1
(22) Anmeldetag: 06.11.2007
(51) Int. Cl.: E01F 9/019, E01F 13/08, G09B 9/042, G09B 9/16

(54) **Vorrichtung zum Fahrtraining**
Device for driver training
Dispositif pour l'entraînement à la conduite

(30) Priorität: 10.11.2006 AT 18632006
(43) Veröffentlichungstag der Anmeldung: 21.05.2008
(73) Patentinhaber: Fischereder, Karl, 4210 Gallneukirchen (AT)
(72) Erfinder: Fischereder, Karl, 4210 Gallneukirchen (AT)
(74) Vertreter: Hübscher, Helmut

(56) Entgegenhaltungen:
- CH-A5- 689 308
- DE-A1- 1 917 275
- GB-A- 2 282 838
- US-A- 4 121 356

## Beschreibung

Die Erfindung bezieht sich auf eine Vorrichtung zum Fahrtraining mit einem Träger und mit einem im Träger zwischen einer Ruhe- und einer Arbeitsstellung schwenkbar gelagerten Hindernis.

Um für einen übenden Fahrzeuglenker ein unerwartetes Hindernis vorzutäuschen, das im Bereich einer Fahrbahn auftritt, ist es bekannt (EP 1 091 335 A2), in der Fahrbahn an Druckleitungen angeschlossene Düsen einzulassen, die mit Wasser beaufschlagt werden, sodass die aufsteigenden Wasserfontänen ein solches Hindernis darstellen, und zwar mit dem Vorteil, dass das Hindernis ohne Beschädigungsgefahr für das Fahrzeug überfahren werden kann. Nachteilig ist allerdings, dass entsprechende Wassermengen zur Verfügung gestellt werden müssen und der Energieaufwand für das Pumpen dieser Wassermengen vergleichsweise groß ist. Außerdem ist der Einsatz solcher Wasserhindernisse nur bei Temperaturen oberhalb des Gefrierpunktes möglich. Abgesehen davon hat die Erfahrung gelehrt, dass solche Wasserhindernisse im realistischen Straßenverkehr auftretende Verkehrshindernisse nur bedingt nachstellen können.

Zur Vorgabe verkehrsnaher Verhältnisse ist es darüber hinaus bekannt, auf einem Fahrzeug einen seitlich auskragenden Träger für ein mechanisches Hindernis vorzusehen, das aus einem beispielsweise die Heckansicht eines Fahrzeuges wiedergebenden Gestell besteht und auf dem Träger in Fahrrichtung schwenkbar gelagert ist, um Auffahrschäden durch ein Ausschwenken des Hindernisses zu vermeiden. Das Gestell stellt allerdings eine nicht unbeachtliche Masse dar, die bei höheren Auffahrgeschwindigkeiten zu Schäden am aufprallenden Fahrzeug und am Hindernis führen kann. Dazu kommt, dass sich solche Hindernisse nicht für den Einbau in Fahrbahnen eignen, weil sie nicht ohne weiteres überfahren werden können.

Zur Errichtung von versenkbaren Straßensperren ist es außerdem bekannt (US 1 439 318 A), einen Absperrzaun vorzusehen, dessen Steher und die zu diesen Stehern quer verlaufenden Holme nach Art von Gelenkparallelogrammen miteinander verbunden sind, sodass ein solcher Absperrzaun in ein in der Fahrbahn versenktes, kastenförmiges Gehäuse abgeschwenkt werden kann, und zwar in Richtung der Zaunebene. Bei einer anderen bekannten Straßensperre (US 1 487 861 A) sind die Steher ebenfalls um Querachsen verschwenkbar in einem Gehäuse gelagert, das in einer Fahrbahn quer zu deren Längsrichtung eingelassen ist. An den in der Arbeitsstellung aus dem Gehäuse aufragenden Stehern ist stirnseitig eine Absperrkette angelenkt deren Enden in seitlichen Begrenzungen der Fahrbahn verankert sind. Um die Kette in der abgeschwenkten Ruhelage des Absperrzaunes aufnehmen zu können sind die Steher mit über ihre Höhe durchlaufenden Längsnuten versehen, in die die Kette beim Abschwenken abgelegt wird. Der Abstand der Steher voneinander muss daher zumindest der Steherlänge entsprechen, wie dies auch bei einem Absperrzaun mit nach Art von Gelenkparallelogrammen miteinander verbundenen Stehern und dazu quer verlaufenden Holmen der Fall ist. Aufgrund der miteinander durch Ketten oder Querholme verbundenen Steher ergeben sich vergleichsweise schwere Konstruktionen, die einem raschen Aufstellen bzw. Absenken dieser Absperrzäune entgegenstehen, was jedoch keinen Nachteil für übliche Straßensperren darstellt, bei denen die Errichtungsgeschwindigkeit im Gegensatz zu unerwarteten Verkehrshindernissen, wie sie für ein Fahrtraining benötigt werden, keine Rolle spielt.
Um im Bedarfsfall den Verkehr an vorgegebenen Orten zwischen zwei Fahrbahnen umleiten zu können, sind darüber hinaus Verkehrsleiteinrichtungen bekannt (CH 689 308 A5), die aus einem in die Fahrbahnen eingelassenen Kanal und in den Kanal abschwenkbaren Leitpfosten bestehen, sodass im Einsatzfall die Leitpfosten mittels eines Schwenkantriebs aus der Verkehrsfläche nach oben ausgeschwenkt werden können. Die Leitpfosten weisen dabei vorzugsweise eine Sollfaltstelle mit einer Aufstellfeder auf, damit Beschädigungen beim Überfahren weitgehend verhindert werden können. Solche Verkehrsleiteinrichtungen sind aber zum Vortäuschen unerwarteter Hindernisse ungeeignet, insbesondere wenn es gilt bestimmte Hindernisse augenfällig nachzustellen. Ähnliches gilt für einen bekannten, umlegbaren Blendschutz für Schnellstraßen (DE 1 917 275 A), bei dem zwischen zwei Leitplanken abklappbare Blendschutzlamellen vorgesehen sind, deren den Abstand zwischen den Leitplanken voll ausnützende Breite den Abstand zwischen den einzelnen Lamellen bestimmt.

Schließlich ist es bei Trainingsstrecken für Lenker von Kraftfahrzeugen mit einer Schleuderstrecke bekannt (EP 1 091 335 A2), einer der Schleuderstrecke vorgelagerten, das Einleiten eines Schleudervorganges für das Kraftfahrzeug erleichternden Rampe zwei Lichtschranken zuzuordnen, um die Entfernung des Fahrzeuges von der Rampe und die Anfahrgeschwindigkeit zur Rampe für die Steuerung der Rampenbewegung nutzen zu können. Die der Schleuderstrecke nachgeordneten Hindernisse werden jedoch durch Wasser strahlen dargestellt.

Der Erfindung liegt somit die Aufgabe zugrunde, eine Vorrichtung der eingangs geschilderten Art zum Fahrtraining so auszugestalten, dass sie sowohl auf einem Fahrzeug montiert als auch als stationäres Hindernis in eine Fahrbahn eingesetzt werden kann.

Die Erfindung löst die gestellte Aufgabe dadurch, dass das Hindernis voneinander gesonderte, an einem Ende auf in Trägerlängsrichtung mit Abstand hintereinandergereihten, parallelen Querachsen gelagerte Einzellamellen umfasst, die auf den unmittelbar aufeinanderfolgenden Querachsen um wenigstens die Lamellendicke gegeneinander versetzt angeordnet und zur Verlagerung zwischen einer zum Träger parallelen Ruhstellung und einer quer vom Träger abstehenden Arbeitsstellung mit einem Schwenkantrieb verbunden sind.

Durch die Aufteilung des Hindernisses in Einzellamellen, die je für sich im Träger um eine Querachse schwenkbar gelagert sind, werden zunächst vorteilhafte Platzverhältnisse geschaffen, weil die in die Ruhestellung abgeschwenkten Einzellamellen parallel zum Träger und nicht quer dazu verlaufen. Die damit verbundene Schwenkbewegung der Einzellamellen in einer quer zur Fahrrichtung verlaufenden Schwenkebene macht allerdings zusätzliche, in Trägerlängsrichtung verlaufende Schwenkachsen für die Einzellamellen erforderlich, wenn die Einzellamellen aufgrund eines Aufpralls in Auffahrrichtung ausschwenken sollen. Die Aufteilung des Hindernisses in einzelne Lamellen ergibt zwar bei einem Aufprall selbst bei größeren Auffahrgeschwindigkeiten wegen der geringen Masse der Einzellamellen vergleichsweise geringe Belastungskräfte, doch kann der größere Konstruktionsaufwand durch die zusätzlichen Schwenkachsen ohne weiteres aufgrund des vorgesehenen Schwenktriebes vermieden werden, weil ja die Einzellamellen mit Hilfe des Schwenkantriebes vor einem Aufprall aus der Arbeitsstellung in die Ruhestellung verschwenkt werden könnten. Der für den Schwenkantrieb erforderliche Energieeinsatz bleibt dabei beschränkt.

Die Anzahl der Einzellamellen kann den jeweiligen Anforderungen entsprechend unterschiedlich ausfallen und ist im Allgemeinen vom einzuhaltenden Seitenabstand der Einzellamellen in ihrer Arbeitsstellung abhängig. Es werden aber üblicherweise mehrere Einzellamellen innerhalb eines einer Lamellenlänge entsprechenden Trägerabschrtittes vorzusehen sein. Zu diesem Zweck sind die Einzellamellen auf den unmittelbar aufeinanderfolgenden Querachsen um wenigstens die Lamellendicke gegeneinander versetzt anzuordnen, was eine gedrängte Aneinanderreihung der Einzellamellen erlaubt. Besonders einfache Konstruktionsverhältnisse können in diesem Zusammenhang dadurch sichergestellt werden, dass der Träger aus einem U-Profil besteht, zwischen dessen beiden die Querachsen aufnehmenden Schenkeln die Einzellamellen angeordnet sind. Der Mindestabstand der beiden Schenkel des U-Profils ergibt sich durch die Dicken der im Längenbereich einer Einzellamelle einander in der Ruhestellung überlappenden Einzellamellen. Statt eines U-Profils kann aber auch vorteilhaft ein Kastenprofil als Träger eingesetzt werden, das im Bereich der Lamellenlagerung mit Durchtrittsöffnungen für die Einzellamellen zu versehen ist.

Der Schwenkantrieb kann aus je einem Stelltrieb für die einzelnen Lamellen aufgebaut werden. Günstigere Antriebsbedingungen ergeben sich jedoch, wenn der Schwenkantrieb einen gemeinsamen Stelltrieb zumindest für eine Gruppe von Einzellamellen aufweist, die über eine Betätigungsstange an den Stelltrieb angeschlossen sind, sodass durch die Beaufschlagung dieses Stelltriebes, vorzugsweise eines Stellzylinders, alle Einzellamellen der Gruppe gemeinsam verschwenkt werden. Das Verschwenken der Einzellamellen aus der Arbeitsstellung in die Ruhestellung muss zur Vermeidung eines Aufpralls unter Umständen sehr rasch erfolgen. Um die dabei auftretenden dynamischen Kräfte abfangen zu können, empfiehlt es sich, dem Schwenkantrieb zumindest für die Ruhestellung der Einzellamellen einen Dämpfungsanschlag zuzuordnen.

Wie unmittelbar erkennbar ist, kann der Träger der erfindungsgemäßen Vorrichtung ohne zusätzlichen Aufwand an einem Fahrzeug seitlich auskragend in einer Überkopfstellung befestigt werden, um ein fahrendes Hindernis zu simulieren. Die erfindungsgemäße Vorrichtung stellt allerdings besonders vorteilhafte Voraussetzungen für den Einbau des Trägers in eine Fahrbahn dar, weil aufgrund der beschränkten Breite des in eine schlitzförmige Ausnehmung in der Fahrbahn eingesetzten Trägers die Vorrichtung ohne Gefahr für die in die Ruhestellung abgeschwenkten Einzellamellen auch von schwereren Fahrzeugen überfahren werden kann.

Um das rechtzeitige Einschwenken der Lammellen gegen den Träger bei einer Aufprallgefahr sicherzustellen, kann der Schwenkantrieb für die Einzellamellen mit Hilfe einer Steuereinrichtung in Abhängigkeit von den Ausgangssignalen wenigstens eines Gebers für den Abstand eines Fahrzeuges vom Träger angesteuert werden. In diesem Fall wird der Istwert des Abstandes gegebenenfalls unter Berücksichtigung der ebenfalls über einen oder mehrere Abstandsgeber ermittelbaren Anfahrgeschwindigkeit mit einem vorgegebenen Grenzwert verglichen, um beim Unterschreiten dieses Grenzwertes den Schwenkantrieb im Sinne eines Verschwenkens der Einzellamellen in ihre Ruhestellung zu beaufschlagen. Mit einem geringen Konstruktionsaufwand kann aus den Abstandsdaten des Abstandsgebers bzw. der Abstandsgeber die zu erwartende Aufprallgeschwindigkeit in einer Auswertestufe der Steuereinrichtung ermittelt und angezeigt werden, wie es auch möglich ist, bei einem verfahrbaren Hindernis das Einhalten eines vorgegebenen Mindestabstandes anzuzeigen.

Zur einfachen Bestimmung der Aufprallgeschwindigkeit können dem in die Fahrbahn eingesetzten Träger in Fahrrichtung vor- und nachgeordnete Näherungsschalter zugeordnet werden, die zur Bestimmung der Aufprallgeschwindigkeit an die Steuereinrichtung angeschlossen sind. Der zeitliche Abstand der Schaltsignale bestimmt ja unter Berücksichtigung des bekannten Abstandes dieser Näherungsschalter die Geschwindigkeit des den Träger mit den in die Ruhestellung eingeschwenkten Einzellamellen überfahrenden Fahrzeuges. Sind über die Länge des Trägers verteilt Näherungsschalter vorgesehen, so kann darüber hinaus festgestellt werden, ob das in den Träger eingeschwenkte Hindernis nur gestreift oder voll getroffen worden wäre.

In der Zeichnung ist der Erfindungsgegenstand beispielsweise dargestellt. Es zeigen
- Fig. 1: eine erfindungsgemäße Vorrichtung zum Fahrtraining in einer zum Teil aufgerissenen, vereinfachten Seitenansicht,
- Fig. 2: diese Vorrichtung ausschnittsweise in einer Draufsicht in einem größeren Maßstab,
- Fig. 3: die Lagerung einer Einzellamelle in einem Längsschnitt in einem größeren Maßstab und
- Fig. 4: einen Schnitt nach der Linie IV-IV der Fig. 3 in einem größeren Maßstab.

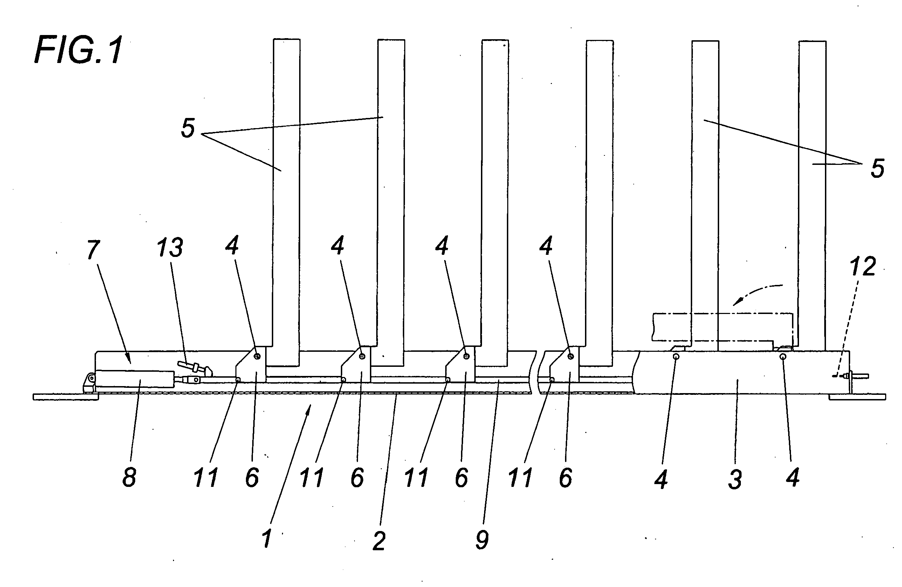

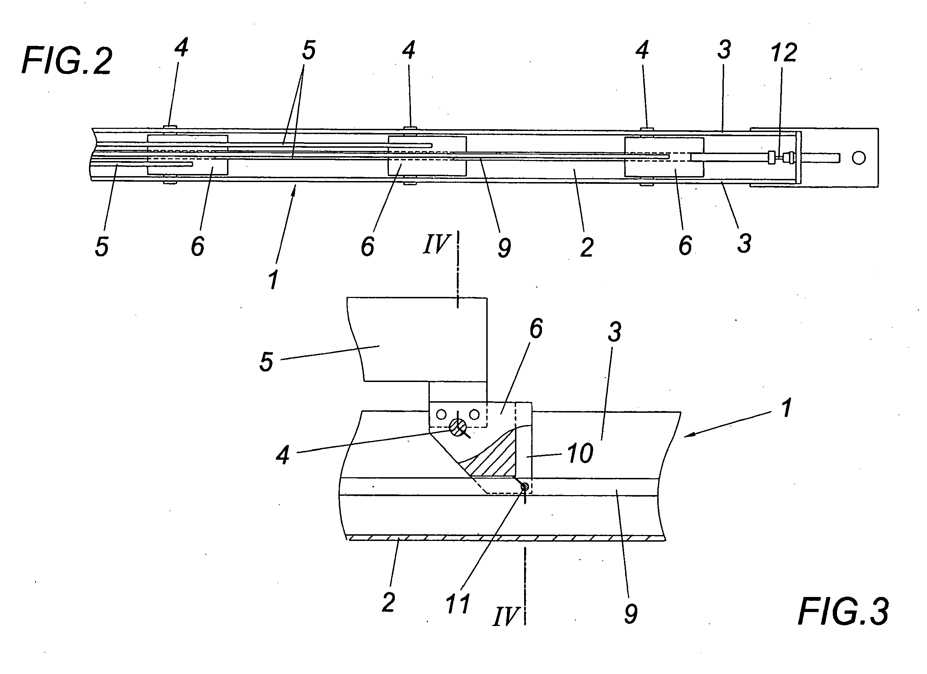

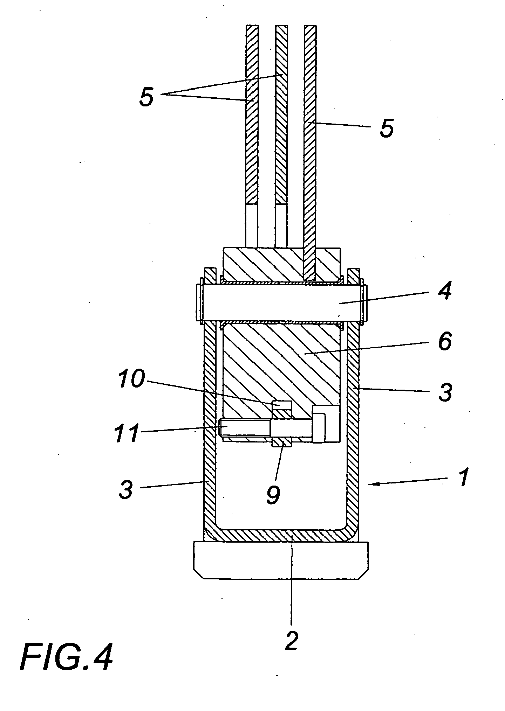

Die dargestellte Vorrichtung weist einen Träger 1 in Form eines U-Profiles 2 auf, zwischen dessen Schenkel 3 mit gegenseitigem Abstand in Trägerlängsrichtung parallele Querachsen 4 gehalten sind. Auf diesen Querachsen 4 sind Einzellamellen 5 schwenkbar gelagert, und zwar mit Hilfe von Lagerkörpern 6, in die die Einzellamellen 5 auswechselbar eingesetzt sind. Diese Lagerkörper 6 sind mit einem Schwenkantrieb 7 verbunden, der gemäß dem dargestellten Ausführungsbeispiel aus einem allen Einzellamellen 5 gemeinsamen Stelltrieb 8 gebildet wird. Mit Hilfe dieses vorzugsweise aus einem Stellzylinder bestehenden Stelltriebes 8 wird eine Betätigungsstange 9 verstellt, an der die Lagerkörper 6 angelenkt sind, wie dies insbesondere den Fig. 3 und 4 entnommen werden kann. Die Betätigungsstange 9 greift zu diesem Zweck in eine Führungsausnehmung 10 der Lagerkörper 6 ein und wird in dieser Führungsausnehmung 10 durch Lagerbolzen 11 gehalten. Durch eine Beaufschlagung der Betätigungsstange 9 können somit die Einzellamellen 5 zwischen einer in der Fig. 1 in vollen Linien dargestellten Arbeitsstellung, in der die Einzellamellen 5 quer vom Träger 1 abstehen, und einer in der Fig. 1 strichpunktiert angedeuteten Ruhestellung verlagert werden, in der die Einzellamellen 5 parallel zum Träger 1 verlaufen. Aus der Fig. 2 wird ersichtlich, dass die einzelnen Lamellen 5 gegeneinander in Richtung der Querachsen 4 versetzt sind, sodass sie in der Ruhestellung einander überlappend nebeneinander zu liegen kommen. Die Mindestbreite der Vorrichtung wird daher durch die Dicken der im Längenbereich einer Einzellamelle einander überlappenden Lamellen 5 bestimmt.

Da der Träger 1 quer zur Fahrrichtung eines übenden Fahrzeuglenkers angeordnet ist, würde ein Aufprall auf die ein Fahrhindernis darstellenden Einzellamellen 5 eine Beschädigungsgefahr für das aufprallende Fahrzeug und die Einzellamellen 5 ergeben, wenn nicht für eine zusätzliche Schwenkachse der Einzellamellen 5 in Längsrichtung des Trägers 1 gesorgt wird, was jedoch mit einem zusätzlichen Konstruktionsaufwand verbunden ist. Um eine Beschädigungsgefahr durch ein Auffahren auf das Hindernis auszuschließen, empfiehlt es sich daher, die Einzellamellen 5 unmittelbar vor einem Aufprall aus der Arbeitsstellung in die gegen den Träger 1 eingeschwenkte Ruhestellung zu verlagern. Zu diesem Zweck kann ein üblicher Geber für den Abstand eines Fahrzeuges vom Träger 1 eingesetzt werden, sodass die erfassten Abstandswerte einer Steuereinrichtung für den Schwenkantrieb 7 zugeleitet werden können, damit in Abhängigkeit eines Vergleiches des Istabstandes mit einem gegebenenfalls unter Berücksichtigung der Fahrgeschwindigkeit des Fahrzeuges vorgebbaren Mindestabstand die Einzellamellen 5 über den Schwenkantrieb 7 zeitgerecht in die Ruhestellung verschwenkt werden können. Diese Verlagerung der Einzellamellen 5 in die Ruhestellung soll rasch erfolgen, was eine entsprechende Beschleunigung der Schwenkbewegung der Einzellamellen 5 mit sich bringt. Um die damit verbundenen Massenkräfte auffangen zu können, kann dem Schwenkantrieb 7 zumindest für die Ruhestellung der Einzellamellen 5 ein Dämpfungsanschlag 12 zugeordnet werden. Gemäß dem Ausführungsbeispiel wirkt dieser Dämpfungsanschlag 12 für die Ruhestellung mit der Betätigungsstange 9 zusammen, wie dies in der Fig. 2 veranschaulicht ist. Ein weiterer Dämpfungsanschlag 13 kann für die Arbeitsstellung vorgesehen werden.

Um feststellen zu können, ob eine Kollision mit dem zeitgerecht vor einem Aufprall in den Träger 1 eingeschwenkte Hindernis stattgefunden hätte, können dem Träger 1 über seine Länge verteilt Näherungsschalter zugeordnet werden, mit deren Hilfe angezeigt werden kann, ob das Hindernis nur gestreift oder voll getroffen worden wäre. Sind dem Träger 1 in Fahrrichtung Näherungsschalter vor- und nachgeordnet, so kann über diese Näherungsschalter die jeweilige Aufprallgeschwindigkeit über die Steuereinrichtung ermittelt werden, weil der zeitliche Abstand der Schaltsignale dieser Näherungsschalter aufgrund des bekannten gegenseitigen Abstandes der Näherungsschalter ein Maß für die Aufprallgeschwindigkeit ist.

Der Träger 1 mit den im Träger 1 verschwenkbar gelagerten Einzellamellen 5 kann über Kopf seitlich auskragend auf einem Trägerfahrzeug montiert werden, sodass die nach unten in die Arbeitsstellung ausschwenkenden Einzellamellen 5 ein bewegliches Hindernis darstellen. Die Vorrichtung kann aber auch vorteilhaft als stehendes Hindernis Verwendung finden, wenn der Träger 1 mit den Einzellamellen 5 in eine schlitzförmige Ausnehmung in der Fahrbahn eingesetzt wird. Die Anordnung muss dabei so getroffen werden, dass die in die Ruhestellung abgeschwenkten Einzellamellen 5 unterhalb der Fahrfläche zu liegen kommen und daher beim Überfahren der Vorrichtung nicht beschädigt werden können.

## Patentansprüche

1. Vorrichtung zum Fahrtraining mit einem Träger und mit einem im Träger zwischen einer Ruhe- und einer Arbeitsstellung schwenkbar gelagerten Hindernis, **dadurch gekennzeichnet, dass** das Hindernis voneinander gesonderte, an einem Ende auf in Trägerlängsrichtung mit Abstand hintereinandergereihten, parallelen Querachsen (4) gelagerte Einzellamellen (5) umfasst, die auf den unmittelbar aufeinanderfolgenden Querachsen (4) um wenigstens die Lamellendicke gegeneinander versetzt angeordnet und zur Verlagerung zwischen einer zum Träger (1) parallelen Ruhstellung und einer quer vom Träger (1) abstehenden Arbeitsstellung mit einem Schwenkantrieb (7) verbunden sind.

2. Vorrichtung nach Anspruch 1, **dadurch gekennzeichnet, dass** der Träger (1) aus einem U-Profil (2) oder einem Kastenprofil besteht, zwischen dessen beiden die Querachsen (4) aufnehmenden Schenkeln (3) die Einzellamellen (5) angeordnet sind.

3. Vorrichtung nach Anspruch 1 oder 2, **dadurch gekennzeichnet, dass** der Schwenkantrieb (7) einen gemeinsamen Stelltrieb (8) zumindest für eine Gruppe von Einzellamellen (5) aufweist, die über eine Betätigungsstange (9) an den Stelltrieb (8) angeschlossen sind.

4. Vorrichtung nach einem der Ansprüche 1 bis 3, **dadurch gekennzeichnet, dass** dem Schwenkantrieb (7) zumindest für die Ruhestellung der Einzellamellen (5) ein Dämpfungsanschlag (12) zugeordnet ist.

5. Vorrichtung nach einem der Ansprüche 1 bis 4, **dadurch gekennzeichnet, dass** der Träger (1) quer zur Fahrrichtung in eine Fahrbahn eingesetzt ist.

6. Vorrichtung nach einem der Ansprüche 1 bis 5, **dadurch gekennzeichnet dass** der Schwenkantrieb (7) für die Einzellamellen (5) mit Hilfe einer Steuereinrichtung in Abhängigkeit von den Ausgangssignalen wenigstens eines Gebers für den Abstand eines Fahrzeuges vom Träger (1) ansteuerbar ist.

7. Vorrichtung nach den Ansprüchen 5 und 6, **dadurch gekennzeichnet, dass** dem Träger (1) in Fahrrichtung vor- und nachgeordnete, zur Bestimmung der Aufprallgeschwindigkeit an die Steuereinrichtung angeschlossene Näherungsschalter vorgesehen sind.

8. Vorrichtung nach einem der Ansprüche 1 bis 7, **dadurch gekennzeichnet, dass** dem Träger (1) über seine Länge verteilte Näherungsschalter zugeordnet sind.

## Claims

1. Device for driver training, having a carrier and a barrier which is pivotably mounted in the carrier between a non-operative position and an operative position, **characterised in that** the barrier comprises mutually separated individual lamella (5) which are mounted at one end on parallel transverse spindles (4) arranged in a row one behind the other at a spaced interval in the longitudinal direction of the carrier, are disposed in an offset manner with respect to each other by at least the lamella thickness on the directly successive transverse spindles (4) and are connected to a pivot drive (7) for displacement between a non-operative position in parallel with the carrier (1) and an operative position projecting transversely from the carrier (1).

2. Device as claimed in claim 1, **characterised in that** the carrier (1) consists of a U-profile (2) or a box profile, between whose two limbs (3) which receive the transverse spindles (4) the individual lamella (5) are disposed.

3. Device as claimed in claim 1 or 2, **characterised in that** the pivot drive (7) comprises a common actuating drive (8) at least for a group of individual lamella (5) which are connected to the actuating drive (8) via an actuating rod (9).

4. Device as claimed in any one of claims 1 to 3, **characterised in that** a damping stop (12) is allocated to the pivot drive (7) at least for the non-operative position of the individual lamella (5).

5. Device as claimed in any one of claims 1 to 4, **characterised in that** the carrier (1) is integrated into a roadway transverse to the direction of travel.

6. Device as claimed in any one of claims 1 to 5, **characterised in that** the pivot drive (7) for the individual lamella (5) can be controlled with the aid of a control device in dependence upon the output signals of at least one sensor for sensing the distance of a vehicle from the carrier (1).

7. Device as claimed in claims 5 and 6, **characterised in that** proximity switches are provided which are disposed upstream and downstream of the carrier (1) in the direction of travel and are connected to the control device in order to determine the barrier impact speed.

8. Device as claimed in any one of claims 1 to 7, **characterised in that** the carrier (1) is allocated proximity switches which are distributed over its length.

## Revendications

1. Dispositif pour l'entraînement à la conduite, avec un support et avec un obstacle, monté à pivotement entre une position de repos et une position de travail, **caractérisé en ce que** l'obstacle comprend des lamelles individuelles (5), séparées les unes des autres, montées à une extrémité sur des axes transversaux (4) parallèles, alignées en rangée les unes derrière les autres à distance dans la direction longitudinale du support, les lamelles individuelles étant disposées de manière décalée les unes par rapport aux autres, le décalage étant d'au moins l'épaisseur de lamelle, sur les axes transversaux (4) se suivant directement, et étant reliées à un entraînement en pivotement (7), pour se déplacer entre une position de repos parallèle au support (1), et une position de travail fraisant saillie transversalement du support (1).

2. Dispositif selon la revendication 1, **caractérisé en ce que** le support (1) est composé d'un profilé en U (2) ou d'un profilé en caisson, entre les deux branches (3), recevant les axes transversaux (4), duquel sont disposées les lamelles individuelles (5).

3. Dispositif selon la revendication 1 ou 2, **caractérisé en ce que** l'entraînement en pivotement (7) présente un mécanisme de commande (8) commun, au moins pour un groupe de lamelles individuelles (5), raccordées au mécanisme de commande (8) par l'intermédiaire d'une tige d'actionnement (9) .

4. Dispositif selon l'une des revendications 1 à 3, **caractérisé en ce qu'**une butée d'amortissement (12) est associée à l'entraînement en pivotement (7), au moins pour la position de repos des lamelles individuelles (5).

5. Dispositif selon l'une des revendications 1 à 4, **caractérisé en ce que** le support (1) est inséré dans une trajectoire de roulage, transversalement à la direction de roulage.

6. Dispositif selon l'une des revendications 1 à 5, **caractérisé en ce que** l'entraînement en pivotement (7) pour les lamelles individuelles (5) est susceptible d'être commandé à l'aide d'un dispositif de commande, en fonction des signaux de sortie d'au moins un capteur appréhendant l'espacement entre un véhicule et le support (1).

7. Dispositif selon les revendications 5 et 6, **caractérisé en ce que** des interrupteurs de proximité, raccordés au dispositif de commande, pour déterminer la vitesse d'impact, disposés en amont et en aval du support (1) en observant dans la direction de roulage, sont prévus.

8. Dispositif selon l'une des revendications 1 à 7, **caractérisé en ce que** des interrupteurs de proximité, répartis sur sa longueur, sont associés au support (1).
